# EUROPEAN PATENT APPLICATION

(11) **EP 0 931 693 A2**
(43) Date of publication of application: **28.07.1999**
(21) Application number: 99300612.1
(22) Date of filing: 27.01.1999
(51) Int. Cl.: B60N 2/28

(54) **Child seat**

(30) Priority: 27.01.1998 JP 1434698; 11.09.1998 JP 25806998
(71) Applicant: Aprica Kassai Kabushikikaisha, Osaka-shi, Osaka (JP)
(72) Inventor: Kassai, Kenzou, Chuo-ku, Osaka-shi, Osaka (JP); Yamamoto, Hiroyasu, Chuo-ku, Osaka-shi, Osaka (JP); Yoneda, Yoshifumi, Chuo-ku, Osaka-shi, Osaka (JP)
(74) Representative: Abbie, Andrew Kenneth

(57) **Abstract**

A child seat has a base 1 and an inclination angle changing base (201). The base 1 and the inclination angle changing base (201) are journaled rotatable about an axis of rotation (201A) at the front portion. At an rear end side, an angle changing apparatus for adjusting a space between the base 1 and the inclination angle changing base (201) is provided. This structure provides a child seat allowing adjustment of the angle of inclination of a support surface supporting a child.

## Description

### BACKGROUND OF THE INVENTION

### Field of the Invention

The present invention relates to a child seat and, more particularly, to an improvement of its structure.

### Description of the Background Art

In these years safety measures have emerged as a critical factor for vehicles, and various vehicular child safety seats have been developed as a device for ensuring the safety of a new-born baby, an infant, a toddler and a child of school age (referred generally as "child" hereinafter) riding on a vehicle.

A schematic structure of a vehicular child safety seat disclosed in Japanese Patent Application No. 9-289733 filed on October 22, 1997 by the same applicant as the present application (which corresponds to United States Patent Application Serial No. 09/004699) will be described with reference to Fig. 8.

The vehicular child safety seat (hereinafter referred to as vehicular child safety seat) 100 includes a base 1 fixed by a seat belt (not shown) installed in the vehicle, and a seat apparatus 2 rotatably supported with respect to the base.

The seat apparatus 2 includes a seat portion 3 for supporting an infant, a back rest 4 coupled in reclinable manner to seat portion 3, and a head guard 5 for protecting a head portion of the child when the back rest is fully reclined backward.

A pair of arm rests 6 and 7 are provided on opposing sides of the seat portion 3, and a pair of side guards 8 and 9 are provided on opposing sides of the back rest 4. Further, support guards 10 and 11 for keeping or supporting side portions of the child's head are provided inside the pair of side guards 8 and 9.

The vehicular child safety seat 100 having the above described structure allows change in shape as the child grows. When the seat apparatus 2 is positioned laterally with respect to the direction of travel of the vehicle with the back rest 4 fully reclined backward, the child seat is so shaped as to provide a bed on which an infant is put.

When the back rest 4 is raised, the seat apparatus 2 provides a sitting portion, and the vehicular child seat 100 can be used from a new-born baby, infant, toddler to a child of a school age, with the seat apparatus 2 fixed on base 1 facing forward or rearward.

As described above, the vehicular child seat described in Japanese Patent Application No. 9-289733 is possible to provide a bed by rotating the seat apparatus 2 laterally with respect to base 1 and by fully declining back rest 4.

When vehicular child seat 100 put in the shape of a bed is fixed on the seat of the vehicle, vehicular child seat 100 is inclined backward, as the seat 120 of the vehicle is generally inclined backward so as to prevent jumping out of the seated passenger.

Therefore, the child put in vehicular child seat 100 is also inclined backward, and he or she is forced to be in an unnatural posture in the vehicular child seat 100.

Vehicular child seat 100 is fixed by a seat belt installed in the vehicle. When base 1 of vehicular child seat 100 is to be fixed by the seat belt, it is difficult to secure the vehicular child seat 100 on the seat of the vehicle unless the seat belt is exactly adjusted.

### SUMMARY OF THE INVENTION

An object of the present invention is to provide a child seat capable of holding a child in an almost horizontal state even when the child seat is used in a shape of a bed.

Another object of the present invention is to provide a child seat allowing secure fixing of itself on a seat of the vehicle.

According to an aspect, the present invention provides a child seat including: a support surface supporting the child; a bottom surface which is in contact with a placing surface below the support surface, of which angle of inclination with respect to the support surface is adjustable; and an inclination angle changing apparatus for changing the angle of inclination of the bottom surface with respect to the support surface.

By this structure, it becomes possible when the child seat is placed on the placing surface, to adjust the support surface for supporting the child at an arbitrary angle, by appropriately adjusting the inclination angle changing apparatus, regardless of the angle of the placing surface.

When the child seat is fixed on the seat of a vehicle by the seat belt installed in the vehicle, it is possible to adjust a distance between the support surface and the bottom surface by adjusting the angle of inclination between the support surface and the bottom surface by the inclination angle changing apparatus. As a result, it becomes possible to adjust the tension of the seat belt installed in the vehicle. This enables secure fixing of the child seat on the seat of the vehicle.

Preferably, in the child seat, one end of the bottom surface is journaled rotatably with respect to the support surface, and the inclination angle changing apparatus is so arranged as to be capable of adjusting the distance between the other end of the bottom surface and the support surface.

Accordingly, the support surface can be inclined with one end of the bottom surface being the center. Therefore, it is possible to change the angle of inclination between the support surface and the bottom surface.

Preferably, the support surface is provided switchable between a state of a chair and a state of a bed. Therefore, even when the child seat is used in the shape of a bed, it is possible to maintain the support surface horizontal, regardless of the angle of inclination of the placing surface. Therefore, even when an infant is put on the support surface, he or she can be held securely and comfortably, not forcing the infant to take an unnatural posture.

According to another aspect, the present invention provides a child seat including a seat having a support surface, and a base supporting the seat from below, the base having an upper surface fixed to the seat, a bottom surface of which angle of inclination with respect to the upper surface being variable, and an inclination angle changing apparatus for changing the angle of inclination of the bottom surface.

By the above described structure, it is possible when the child seat is placed on a placing surface, to adjust the support surface supporting the child at an arbitrary angle, by the adjustment of the inclination angle changing apparatus, regardless of the angle of the placing surface.

Further, when the child seat is fixed on the seat of a vehicle by the seat belt installed in the vehicle, it is possible to adjust the distance between the support surface and the bottom surface by adjusting the angle of inclination between the support surface and the bottom surface by using the inclination angle changing apparatus. As a result, it is possible to adjust tension of the seat belt installed in the vehicle. Therefore, the child seat can surely be secured on the seat of the vehicle.

Preferably, in the vehicular child safety seat, the seat is switchable between the state of a chair and the state of a bed, provided rotatably about the base.

Therefore, even when the child seat is used in the shape of a bed, it is possible to maintain the support surface horizontal regardless of the angle of inclination of the placing surface. Therefore, when an infant is put on the support surface, for example, he or she can be held securely and comfortably, not forcing the infant to take an unnatural posture.

The vehicular child safety seat in accordance with the present invention includes a seat for supporting a child, and a base supporting the seat and fixed on a seat of the vehicle by a seat belt installed in the vehicle, the safety seat further having an attachment surface on which the seat belt installed in the vehicle is attached, and an attachment surface height adjusting apparatus for adjusting the height of the attachment surface from the seat of the vehicle.

As the attachment surface height adjusting apparatus is provided, when the vehicular child safety seat is secured on the seat of the vehicle by a seat belt installed in the vehicle, it is possible to more securely fix the child seat on the seat of the vehicle, as the tension of the seat belt can be increased by setting higher the attachment surface, for example.

Preferably, the base has a bottom surface which is in contact with the placing surface below the seat surface and of which angle of inclination with respect to the seat surface is adjustable, and the attachment surface height adjusting apparatus is provided to change the angle of inclination of the bottom surface with respect to the seat surface.

Preferably, the attachment surface height adjusting apparatus is provided to change the height of the attachment surface with respect to the base.

Accordingly, it becomes possible to adjust the tension of the seat belt installed in the vehicle. As a result, the child seat can securely be fixed on the seat of the vehicle.

Preferably, the child seat has an inclination angle indicating apparatus for indicating optimal angle of inclination of the support surface with respect to the placing surface, in accordance with the state of supporting the child. Therefore, the optimal angle of inclination of the support surface when the child seat is used in shape of a bed and the optimal angle of inclination of the support surface when the child seat is used in the shape of a chair can readily be known. Therefore, it is possible to readily attain a comfortable state for the child.

Preferably, the child seat has an inclination angle range indicating apparatus for indicating optimal range of the angle of inclination of the support surface with respect to a horizontal surface, in accordance with the state of supporting the child.

More preferably, the inclination angle range indicating apparatus indicates, when the vehicular child safety seat is in the shape of a bed, that the support surface is almost horizontal. Further, it indicates when the vehicular child safety seat is in the shape of the chair, that the support surface is inclined backward with respect to the horizontal surface.

Accordingly, the optimal angle of inclination of the support surface when the child seat is used in the shape of a bed, and the optimal angle of inclination of the support surface when the child seat is used in the shape of a chair can be readily be known. Therefore, it is possible to attain a comfortable state for the child.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a first cross section showing a mechanism of a base portion of the vehicular child seat in accordance with an embodiment of the present invention.

Fig. 2 is a cross section taken along the line X-X' of Fig. 1.

Fig. 3 is a second cross section showing a mechanism of the base portion of the vehicular child seat in accordance with an embodiment of the present invention.

Fig. 4 is a cross section taken along the line X-X' of Fig. 3.

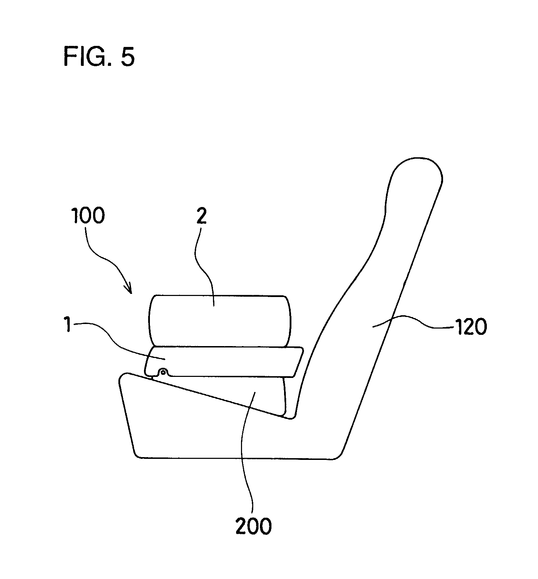

Fig. 5 is a schematic illustration showing the effect of the vehicular child seat in accordance with an embodiment of the present invention.

Fig. 6 is a schematic view of an inclination angle indicating apparatus indicating the angle of inclination of the base with respect to the seat of the vehicular child seat in accordance with an embodiment of the present invention.

Fig. 7 represents the indication of the angle of the inclination.

Fig. 8 is an overall perspective view showing the vehicular child seat.

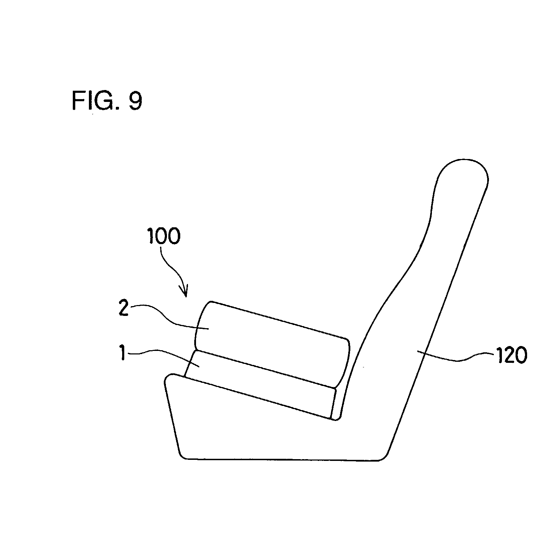

Fig. 9 is a schematic illustration of a conventional problem.

### DESCRIPTION OF THE PREFERRED EMBODIMENTS

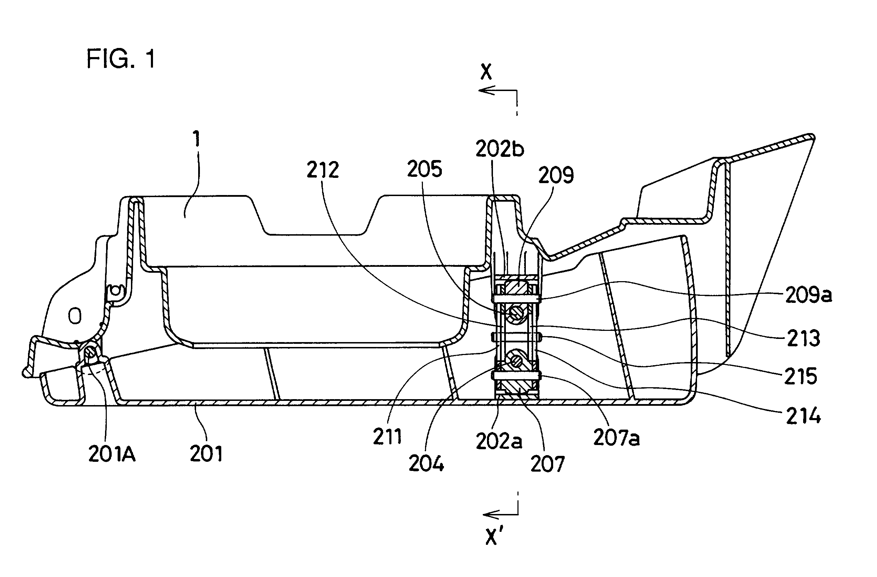

Embodiments of the child seat in accordance with the present invention will be described with reference to Figs. 1 to 4. Figs. 1 to 4 show the present invention applied to a vehicular child seat.

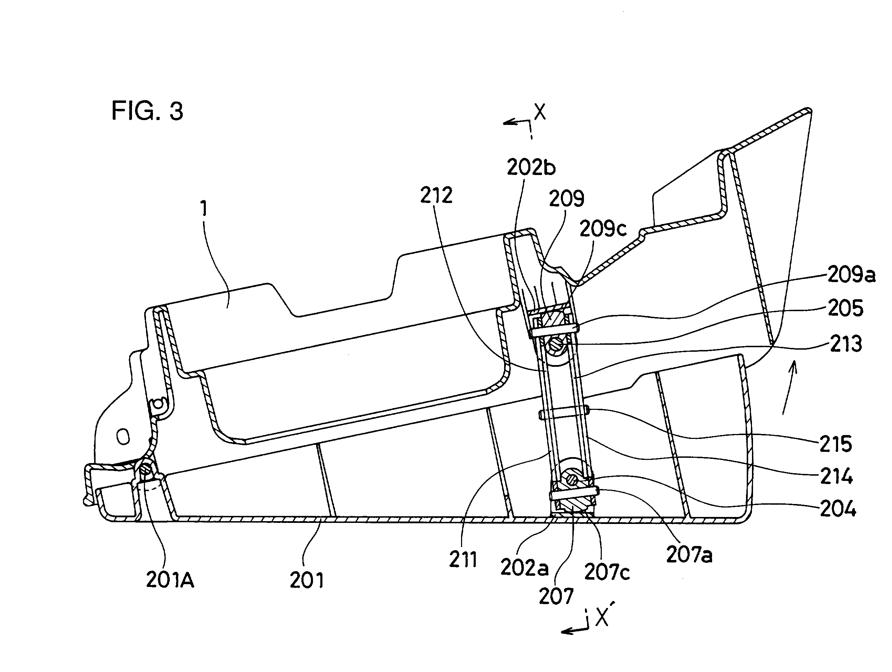

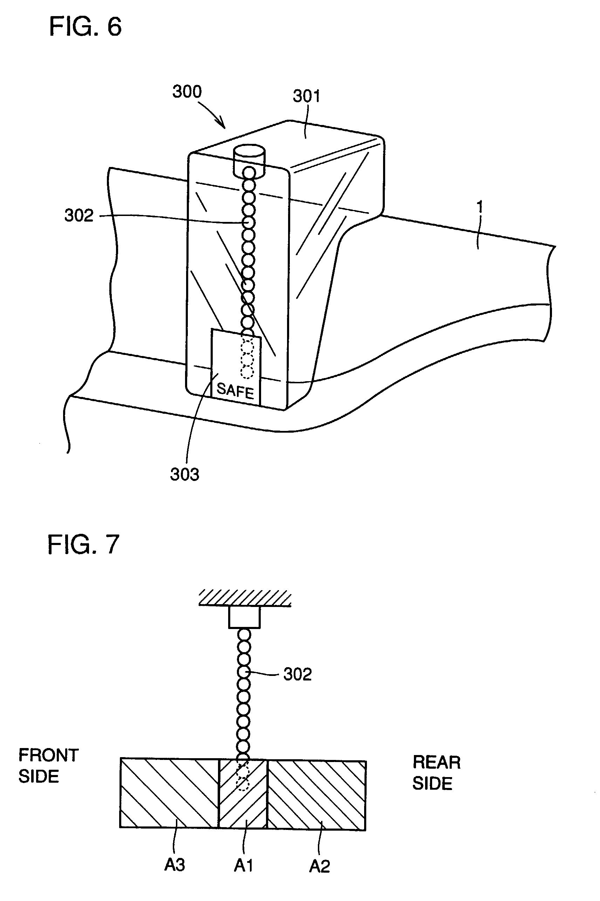

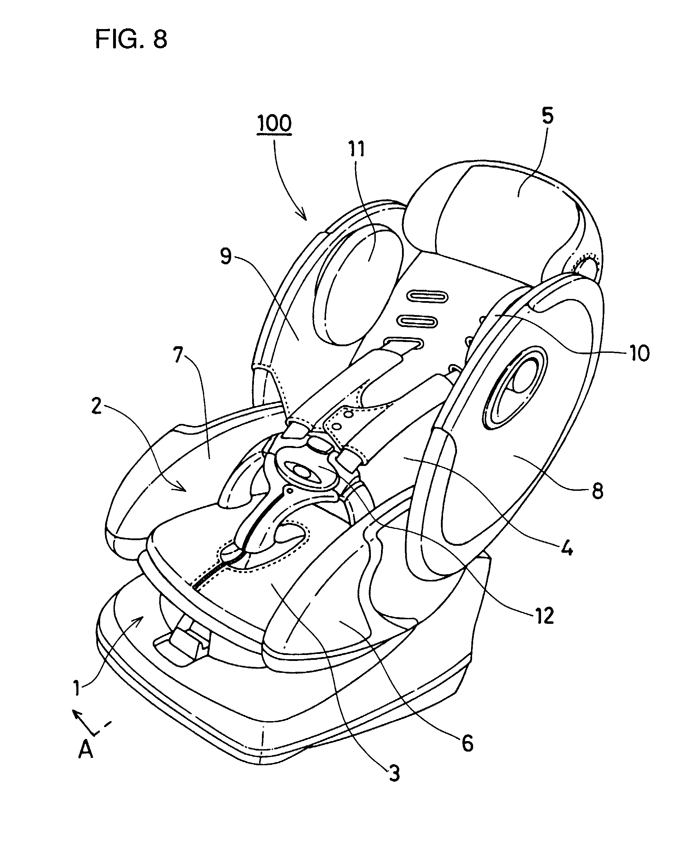

Basic structure of the vehicular child seat is the same as the conventional vehicular child seat described with respect to Fig. 6. Therefore, description thereof is not repeated, and only the mechanism of a base portion, which is the characteristic feature of the present invention, will be described in the following. Figs. 1 and 3 are cross sections taken along the arrow A of Fig. 8, and Figs. 2 and 4 are cross sections taken along the line X-X' of Figs. 1 and 3.

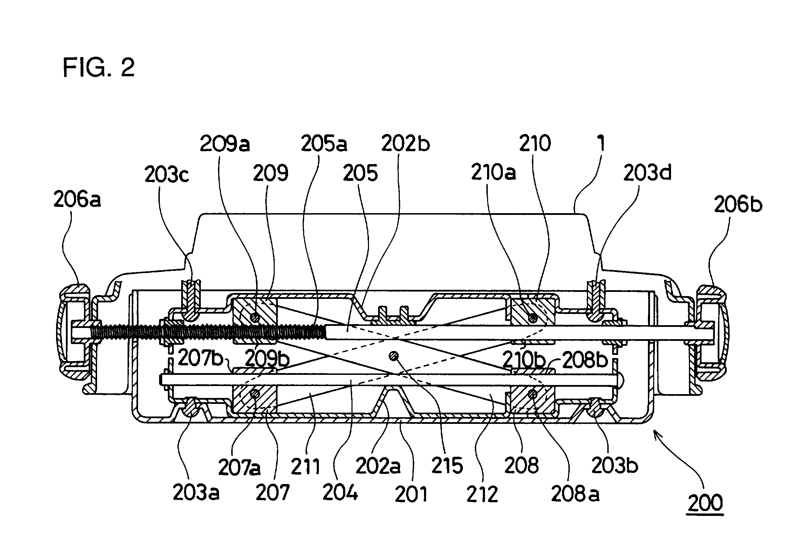

First, referring to Figs. 1 and 2, there is an inclination angle changing base 201 provided at a lower portion of a base 1. Base 1 and inclination angle changing base 201 are journaled rotatably about a rotation axis 201A at a front portion. At a rear end portion of base 1, an inclination angle changing apparatus 200 is provided for adjusting a distance between base 1 and inclination angle changing base 201 at the rear end side.

The inclination angle changing apparatus 200 has a lower bracket 202a attached to inclination angle changing base 201 by means of rivets 203a and 203b, and an upper bracket 202b attached to base 1 by means of rivets 203a and 203d. A lower shaft 204 extending laterally is provided at lower bracket 202a. An upper shaft 205 is provided above and parallel to lower shaft 204, at upper bracket 202b.

At one end of upper shaft 205, there is a male screw portion 205a. Handles 206a and 206b for rotating the upper shaft 205 are provided at opposing ends.

Lower shaft 204 is provided with a lower movable block 207 and a lower fixed block 208. Lower movable block 207 is slidable along lower shaft 204, as the lower shaft 204 is inserted through a sliding hole 207b provided in lower movable block 207. The lower fixed block 208 is fixed on lower bracket 202a, with lower shaft 204 inserted through a sliding hole 208b provided in the lower fixed block 208.

The upper shaft 205 is provided with an upper movable block 209 and an upper fixed block 210. The upper movable block 209 is provided with a female screw 209b which mates the male screw 205a provided on upper shaft 205, whereby it is movable along the axial direction of upper shaft 205, as upper shaft 205 rotates.

The upper fixed block 210 is fixed on upper bracket 202b, with upper shaft 205 inserted through a sliding hole 210b provided in upper fixed block 210.

Angle adjusting plates 211 and 214 are provided for coupling lower movable block 207 and upper fixed block 210. Angle adjusting plates 211 and 214 are journaled rotatable about a pin 207a with respect to lower movable block 207 and journaled rotatably about a pin 210a with respect to upper fixed block 210.

Angle adjusting plates 212 and 213 are provided between lower fixed block 208 and upper movable block 209, and angle adjusting plates 212 and 213 are journaled rotatable about a pin 208a with respect to lower fixed block 208, and journaled rotatable about a pin 209a with respect to upper movable block 209. Therefore, angle adjusting plates 211 and 214 and angle adjusting plates 212 and 213 are arranged in X shape as shown in the figure, with the angle adjusting plates 211 to 214 journaled rotatable about a pin 215.

Figs. 1 and 2 show the mechanism having the above described structure when the distance between base 1 and inclination angle changing base 201 is the smallest. When upper shaft 205 is rotated in a prescribed direction by handles 206a and 206b, upper movable block 209 screwed to male screw portion 205a moves inward accordingly.

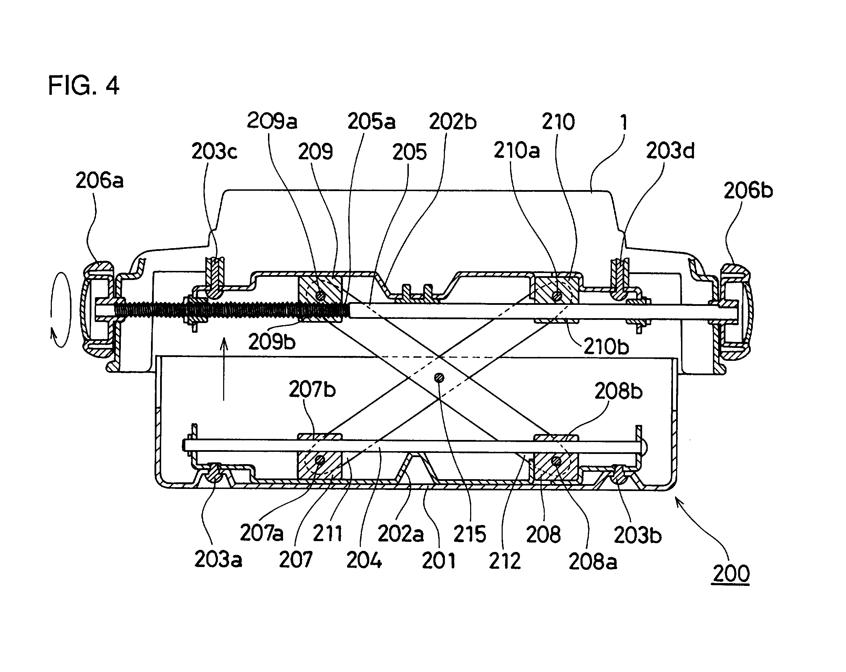

Accordingly, by the rink mechanism including angle adjusting plates 211 to 214, the distance between base 1 and inclination angle changing base 201 gradually increases as shown in Figs. 3 and 4. Figs. 3 and 4 show the state when the distance between base 1 and inclination angle changing base 201 is the largest.

When base 1 and inclination angle changing base 201 rotate about the rotation axis 201a as shown in Fig. 3, inclination angle changing apparatus 200 comes to be gradually inclined with respect to base 1 and inclination angle changing base 201. In order to attain this inclination smooth, contact surfaces of lower movable block 207 and lower fixed block 208 with lower bracket 202a are adapted to have curved surfaces 207c and 208c, while contact surfaces of upper movable block 209 and upper fixed block 210 with upper bracket 202b are adapted to have curved surfaces 109c and 210c.

As described above, by rotating upper shaft 205 in the prescribed direction by handles 206a and 206b, it is possible to adjust the space between base 1 and inclination angle changing base 201 to an arbitrary distance.

Therefore, when the vehicular child seat 100 having the inclination angle changing apparatus 200 is mounted on the seat of a vehicle and the child seat 100 is used in the shape of a bed, the seat apparatus 2 of child seat 100 can be kept horizontal, by setting the space between base 1 and inclination angle changing base 201 at an arbitrary distance. Accordingly, the problem described with reference to Fig. 7 can be avoided, and a stable bed surface can be provided for the infant.

Further, when vehicular child seat 100 is used in the shape of a chair, it is possible to set the seat apparatus 2 at an accuratel angle by adjusting the space between base 1 and inclination angle changing base 201 in accordance with the angle of rearward inclination of the vehicular seat.

Further, the following effects can be provided when the vehicular child seat 100 is mounted on the vehicular seat by using the seat belt.

Generally, when the vehicular child seat is fixed on the vehicular seat, the attachment surface of the seat belt of the vehicle is provided at a base portion of the vehicular child seat. Further, in order to secure the child seat on the vehicular seat, the seat belt must not be slack after fixing.

If it is possible to adjust the space between base 1 and inclination angle changing base 201, it is possible to adjust the distance between the vehicular seat and the seat belt attachment surface on the base of the child seat. Therefore, tension of the seat belt can be adjusted by changing the distance between the base and the inclination angle changing base.

Though the present invention applied to a vehicular child seat has been described above, the application is not limited thereto. The present invention may be applied to any seat used for a child.

Though a link mechanism utilizing angle adjusting plates has been adopted in inclination angle changing base 201 for adjusting the space between base 1 and inclination angle changing base 201, the mechanism is not limited thereto. A mechanism utilizing a hydraulic cylinder, for example, may be employed.

As to the means for changing the space between the seat belt attachment surface and the vehicular seat when the child seat is mounted on the vehicular seat, not only the mechanism for changing the space between the base and inclination angle changing base but also a mechanism for elevating the attachment surface may be provided only on the attachment surface, so as to adjust the tension of the seat belt.

Preferably, an inclination angle indicating apparatus 300 is provided on base 1, for indicating optimal angle of inclination of the support surface with respect to the vehicular seat 120 in accordance with the state of supporting a child on the vehicular seat, as shown in Fig. 6.

Inclination angle indicating apparatus 300 has a transparent case 301 and a chain 302 suspended from an upper end of transparent case 301. A reference plate 303 is provided on transparent case 301, for determining optimal inclination angle of the support surface with respect to the vehicular seat 120, based on the inclination of chain 302.

Reference plate 303 has an indication of an optimal range of inclination angle (A1) of base 1 when vehicular seat is used in the shape of a bed an optimal range of the inclination angle (A2) of base 1 when the vehicular child seat is used in the shape of a chair, and a range of inclination angle (A3) of base 1 not suitable for the child seat, as shown in Fig. 7. By adjusting inclination angle changing base 201 such that chain 302 is positioned in the indicated range of inclination, comfortable state of supporting the child is realized. In the present invention, the optimal range of inclination angle (A1) when the child seat is used in the shape of a bed corresponds to a range at which the bed surface is almost horizontal, and the optimal range of the inclination angle (A2) of base 1 when the child seat is used in the shape of a chair corresponds to a range at which the child seat is inclined rearward with respect to the horizontal surface, and the undesirable range of the inclination angle (A3) of base 1 corresponds to the range at which the child seat is inclined forward with respect to the horizontal surface.

The structure of inclination angle indicating apparatus 300 is not limited to the one described above. A known level vial or the like may be used. Further, as to the position of attaching inclination angle indicating apparatus 300, the position is not limited to base 1, and the apparatus may be attached to handle 206a or 206b of inclination angle changing base 201, provided that operation of the handle is not hindered.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A child seat, comprising:
a support surface (2) supporting a child;
a bottom surface (1) which is brought into contact with a placing surface below said support surface, with an inclination angle with respect to said support surface being adjustable; and
inclination angle changing means for changing the angle of inclination of said bottom surface with respect to said support surface (2).

2. A child seat according to claim 1, wherein one end of said bottom surface (1) is journaled rotatable with respect to said support surface (2), and
said inclination angle changing means (200) is so arranged as to enable adjustment of a space between the other end of said bottom surface (1) and said support surface.

3. A child seat according to claim 1 or 2, wherein said support surface (2) is provided switchable between a state of a chair and a state of a bed.

4. A child seat comprising a seat (2) having a support surface, and a base (1) supporting said seat from below, wherein
said base (1) includes
an upper surface (1) coupled to said seat,
a bottom surface (201) of which angle of inclination with respect to said upper surface being variable, and
an inclination angle changing base (200) for changing the angle of inclination of said bottom surface with respect to said upper surface.

5. A child seat according to claim 4, wherein said seat (2) is a vehicular child safety seat switchable between a state of a chair and a state of a bed, provided rotatable about said base (1).

6. A vehicular child safety seat including a seat surface (2) supporting said child, and a base supporting said seat surface (2) and fixed on a seat of a vehicle by using a seat belt installed in the vehicle, comprising:
an attachment surface (1) on which said seat belt installed in said vehicle is attached; and
attachment surface height adjusting means for adjusting height of said attachment surface from the seat of said vehicle.

7. A vehicular child safety seat according to claim 6, wherein said base (201) has a bottom surface (201) which is brought into contact with a placing surface below said seat surface with an angle of inclination with respect to said seat surface being adjustable, and
said attachment surface height adjusting means (200) changes the angle of inclination of said bottom surface (201) with respect to said seat surface (2).

8. A vehicular child safety seat according to claim 6, wherein said attachment surface height adjusting means (200) changes height of said attachment surface (1) with respect to said base (201).

9. A child seat according to claim 1, comprising inclination angle indicating means (300) for indicating an optimal angle of inclination of said support surface with respect to said placing surface, in accordance with a state of supporting said child.

10. A child seat according to claim 1, comprising inclination angle range indicating means (300) for indicating an optimal range of an angle of inclination of said support surface with respect to a horizontal surface, in accordance with a state of supporting said child.

11. A child seat according to claim 10, wherein said inclination angle range indicating means (300) indicates that said support surface is approximately horizontal when the child seat is in the state of a bed.

12. A child seat according to claim 10 or 11, wherein said inclination angle range indicating means (300) indicates that said support surface is inclined rearward with respect to a horizontal surface, when the child seat is in the state of a chair.

13. A child seat according to claim 4, comprising inclination angle indicating means (300) for indicating an optimal angle of inclination of said support surface with respect to a placing surface, in accordance with a state of supporting said child.

14. A child seat according to claim 4, comprising inclination angle range indicating means (300) for indicating an optimal range of an angle of inclination of said support surface with respect to a horizontal surface, in accordance with a state of supporting said child.

15. A child seat according to claim 14, wherein said inclination angle range indicating means (300) indicates that said support surface is approximately horizontal when the child seat is in the state of a bed.

16. A child seat according to claim 14 or 15, wherein said inclination angle range indicating means (300) indicates that said support surface is inclined rearward with respect to the horizontal surface, when said child seat is in the state of a chair.

17. A vehicular child safety seat according to claim 6, comprising inclination angle indicating means (300) for indicating an optimal angle of inclination of said support surface with respect to a placing surface, in accordance with a state of supporting said child.

18. A vehicular child safety seat according to claim 6, comprising inclination angle range indicating means (300) for indicating an optimal range of an angle of inclination of said support surface with respect to a horizontal surface, in accordance with a state of supporting said child.

19. A vehicular child safety seat according to claim 18, wherein said inclination angle range indicating means (300) indicates that said support surface is approximately horizontal when said vehicular child safety seat is in the state of a bed.

20. A vehicular child safety seat according to claim 18 or 19, wherein said inclination angle range indicating means (300) indicates that said support surface is inclined rearward with respect to the horizontal surface when said vehicular child safety seat is in the state of a chair.

21. A child seat for fitting to a vehicle seat, said child seat comprising a base portion (1) having a bottom surface (201) for engaging a seat portion of a vehicle seat, a backrest portion (4) and a seat portion (3) having a top supporting surface, said seat portion being mounted on said base portion, and said child seat further comprising means for adjusting the height of at least a portion of said top, supporting surface with respect to said bottom surface.
